# EUROPÄISCHE PATENTSCHRIFT

(11) **EP 1 282 997 B1**
(45) Veröffentlichungstag und Bekanntmachung des Hinweises auf die Patenterteilung: **28.07.2004**
(21) Anmeldenummer: 01944918.0
(22) Anmeldetag: 09.05.2001
(51) Int. Cl.: H04Q 7/38, H04L 29/06

(54) **VERFAHREN ZUM UMLEGEN EINES TUNNELS ZWISCHEN KNOTEN EINES GPRS-SYSTEMS**
METHOD FOR TRANSFERRING A TUNNEL BETWEEN NODES IN A GPRS SYSTEM
PROCEDE DE TRANSFERT DE TUNNEL ENTRE DES NOEUDS D'UN SYSTEME GPRS

(30) Priorität: 16.05.2000 DE 10023963; 04.08.2000 DE 10038182
(43) Veröffentlichungstag der Anmeldung: 12.02.2003
(73) Patentinhaber: SIEMENS AKTIENGESELLSCHAFT, 80333 München (DE)
(72) Erfinder: MÜLLER, Hans, 81373 München (DE)
(86) Internationale Anmeldenummer: PCT/DE2001/001757
(87) Internationale Veröffentlichungsnummer: WO 2001/089232

(56) Entgegenhaltungen:
- EP-A- 0 971 553

## Beschreibung

Die vorliegende Erfindung betrifft Verfahren zum Umlegen eines Tunnels von einem ersten bedienenden Knoten eines GPRS-Systems (General Packet Radio Service) auf einen zweiten.

Das Umlegen eines Tunnels ist erforderlich, wenn ein mobiles Endgerät, das den betreffenden Tunnel nutzt, aus dem Einzugsbereich des ersten bedienenden Knotens in den des zweiten wechselt. Dieser Wechsel hat ein RAU (Routing Area Update) zur Folge, in dessen Verlauf Daten über den PDP-Kontext des Endgeräts vom ersten zum zweiten bedienenden Knoten weitergereicht werden. Die Übertragung dieser Daten erfolgt in Form von Nachrichten nach dem GTP-Protokoll (GPRS-Tunnel-Protokoll). Nachrichten des GTP-Protokolls werden unter anderem zum Auf- und Abbau von PDP-Kontexten und zum Weiterreichen von PDP-Kontexten im Falle von Routing Area Updates verwendet. Für Einzelheiten über das GTP-Protokoll wird auf die Spezifikationsschrift 3G TS 23.060 Technical Specification Group Services and System Aspects; General Packet Radio Service (GPRS); Service Description; Stage 2 (Release 1999), zum Beispiel in der Version V3.3.0 vom April 2000 des 3GPP (3^{rd} Generation Partnership Project, www.3GPP.ORG) verwiesen.

Die zwischen den zwei bedienenden Knoten übertragenen Daten ermöglichen es dem zweiten bedienenden Knoten, einen Kontakt zu einem Gateway-Knoten aufzunehmen und sich von dort die benötigten vollständigen Informationen über den Kontext zu beschaffen, die es ihm ermöglichen, den GTP-Tunnel umzuschalten, so daß der Dienst für das Endgerät unterbrechungsfrei fortgesetzt werden kann.

Für das GTP-Protokoll sind bisher zwei Versionen standardisiert, zum einen die GTP-Version 0, auch als Release 98 bzw. 97 bezeichnet, in GSM 09.60; zum anderen GTP-Version 1, auch als Release 99 bezeichnet, in der bereits genannten Veröffentlichung TS 23.060. Die Standardisierung der Version 1 verlangt, daß Knoten gemäß Version 1 mit solchen nach Version 0 zusammenarbeiten können sollen, und daß die GTP-Tunnel mit der jeweils höchstmöglichen Version betrieben werden.

Damit ein empfangender Knoten die GTP-Version erkennen kann, gemäß der eine empfangene Nachricht erstellt worden ist, tragen die Nachrichten jeweils im Kopf ein Kennzeichen, das die Zuordnung zur jeweiligen Version ermöglicht. Nachrichten, die gemäß Version 1 erstellt worden sind, sind von Knoten, die nach Version 0 oder noch älteren Standardisierungen arbeiten, nicht interpretierbar. Ein Knoten nach Version 1 muß daher in der Lage sein, je nach GTP-Version, die ein Knoten, an den er Nachrichten sendet, anwendet, diese Nachrichten entweder gemäß Version 1 oder Version 0 zu erstellen.

Ein wesentlicher Unterschied zwischen Version 0 und Version 1 des GTP-Protokolls ist das Verfahren, nach dem eine Nachricht dem aufgebauten Tunnel beziehungsweise einem PDP-Kontext zugeordnet wird. Bei Version 0 werden hierfür sogenannte Tunnel Identifier, abgekürzt TIDs, verwendet, die als Teil der Nachricht übertragen werden und sich aus der IMSI (International Mobile Subscriber Identity) und dem NSAPI (Network Layer Service Access Point Identifier) zusammensetzen. Die IMSI ist die weltweit eindeutige Kennziffer eines Teilnehmers; der NSAPI referenziert einen von mehreren PDP-Kontexten, die dem Teilnehmer zugeordnet sein können. Da die Tunnel Identifier mit 12 Byte Länge recht unhandlich sind, werden an ihrer Stelle zusätzlich sogenannte Flow Labels mit einer Länge von 2 Byte verwendet, die ein schnelle Zuordnung von Nachrichten zu einem Kontext ermöglichen. Die Flow Labels werden aber nicht unbedingt eindeutig vergeben, da sie nur einen Wertebereich von ca. 65,000 haben und deutlich mehr Kontexte je Knoten aufgebaut werden können.

Die Flow Labels werden jeweils bei der Aktivierung eines GTP-Tunnels vergeben; jeder an einem Tunnel beteiligte Knoten teilt dabei dem Gegenknoten mit, mit welchem Flow Label er nachfolgende Nachrichten auf diesem Tunnel oder, was gleichbedeutend ist, für diesen PDP-Kontext, erhalten will. Bei der ersten Nachricht, die im Rahmen des Aufbaus eines Tunnels von einem bedienenden Knoten an einen Gateway-Knoten gesendet wird (Create PDP Context Request) steht das Flow Label auf 0, weil der Gateway-Knoten noch kein Flow Label hat vergeben können, und der Tunnel Identifier wird übertragen; alle nachfolgenden Nachrichten dieses Tunnels müssen mit dem vom Gateway-Knoten vergebenen Flow Label gesendet werden. Genau genommen werden jeweils zwei Flow Label vergeben, eines für Signalisierung und eines für Daten. Im folgenden wird aber lediglich das Flow Label für Signalisierung betrachtet.

In der GTP-Version 1 werden sogenannte TEID (Tunnel Endpoint Identifier) vergeben, die die gleiche Funktion wie die Flow Labels haben, jedoch eine Länge von 4 Byte besitzen. Die TEID sind daher mit den Flow Labels nach Version 0 nicht kompatibel, sie können aber eindeutig vergeben werden. Der aus der Version 0 bekannte Tunnel Identifier ist in Nachrichten nach Version 1 nicht mehr enthalten. IMSI und NSAPI, die eine eindeutige Zuordnung der Nachricht zu einem PDP-Kontext ermöglichen, sind nur in der ersten Nachricht (Create PDP Context Request) vom bedienenden Knoten an den Gateway-Knoten enthalten.

Innerhalb der jeweiligen Version funktionieren beide Versionen des GTP einwandfrei. In der Standardisierung ist gefordert, daß ein Knoten für Version 1 auch die GTP-Version 0 unterstützt, also rückwärtskompatibel ist. Dies ist erforderlich, damit Knoten unterschiedlicher Versionen zusammenarbeiten können.

Es treten jedoch Probleme auf, wenn ein Mobilfunkteilnehmer sich in einem Netz, das Knoten unterschiedlicher Versionen enthält, bewegt und dabei vom Einzugsbereich eines bedienenden Knotens in den eines anderen wechselt. Dieser Wechsel hat ein RAU (Routing Area Update) zur Folge, bei dem ein Tunnel von dem Knoten, in dessen Einzugsbereich sich der Teilnehmer zuvor aufgehalten hat, an den Knoten des neuen Einzugsbereichs übergeben wird. Im Rahmen dieser Prozedur müssen Daten über den PDP-Kontext vom alten zum neuen Knoten mit Hilfe von GTP-Nachrichten weitergereicht werden. Diese Daten benötigt der neue Knoten, um den Kontakt zum Gateway-Knoten aufzunehmen und den GTP-Tunnel umzuschalten, so daß der Dienst für den Teilnehmer unterbrechungsfrei fortgesetzt werden kann. Wenn alle drei an der Umschaltung des Tunnels beteiligten Knoten der gleichen GTP-Version angehören, ist die Umschaltung unproblematisch. Auch wenn zwei von ihnen Knoten nach Version 0 sind und der dritte ein Knoten nach Version 1 ist, ergeben sich keine Probleme, da sämtliche zwischen den Knoten ausgetauschten Nachrichten solche nach GTP-Version 0 sein müssen. Wenn allerdings zwei Knoten der Version 1 und der dritte der Version 0 angehören, führt die Tatsache, daß die zwei Knoten nach Version 1 untereinander mit Version-1-Nachrichten und mit dem im dritten Knoten mit Version-0-Nachrichten kommunizieren, zu Schwierigkeiten. Drei Fälle sind zu unterscheiden.
1. Der Mobilfunkteilnehmer bewegt sich von einem ersten bedienenden Knoten nach Version 0 zu einem zweiten nach Version 1. Bei dieser Situation muß für die Kommunikation des ersten bedienenden Knotens mit dem zweiten und mit dem Gateway-Knoten GTP-Version 0 benutzt werden; die Kommunikation zwischen Gateway-Knoten und zweitem bedienenden Knoten findet nach Version 1 statt. Beim Aufbau des Tunnels ordnet der Gateway-Knoten ein Flow Label zu, welches vom ersten bedienenden Knoten zum Kennzeichnen von zu dem Tunnel gehörenden Nachrichten benutzt wird. Wenn die zwei bedienenden Knoten Kontakt aufnehmen, um die Umlegung des Tunnels vorzubereiten, kommunizieren sie nach Version 0, und der erste bedienende Knoten liefert an den zweiten das Flow Label, das ursprünglich vom Gateway-Knoten dem Tunnel zugeordnet worden ist. Um die erforderlichen Kontextdaten des Tunnels vom Gateway-Knoten zu erhalten, müßte der zweite bedienende Knoten eine Nachricht mit diesem Flow Label an den Gateway-Knoten schicken können. Der zweite bedienende Knoten und der Gateway-Knoten kommunizieren jedoch nach Version 1, die die Übertragung von Flow Labels nicht zuläßt. Anstelle des Flow Labels könnte zwar ein TEID nach Version 1 übertragen werden, doch ist ein solcher im Gateway-Knoten für den Tunnel nicht definiert. Der Gateway-Knoten kann somit dem bestehenden Kanal keine Nachricht nach GTP-Version 1 zuordnen. Da die Nachricht "Update PDP Context Request" weder IMSI noch NSAPI enthält, ist der Gateway-Knoten auch dann nicht in der Lage, den Kontext zu finden, wenn er den TEID ignoriert.
2. Der Mobilfunkteilnehmer bewegt sich von einem ersten bedienenden Knoten nach Version 1 zu einem nach Version 0. In diesem Fall ist bei der Kommunikation zwischen dem ersten bedienenden Knoten und dem Gateway-Knoten im Rahmen des Aufbaus des Tunnels GTP-Version 1 verwendet worden, d.h. es ist zwar ein TEID für den Tunnel festgelegt worden, aber kein Flow Label. Für die Kommunikation zwischen den zwei bedienenden Knoten muß GTP-Version 0 verwendet werden, diese erlaubt jedoch nur Flow Label. Eine Möglichkeit, den TEID an den zweiten Knoten zu übertragen, besteht nicht, und selbst wenn sie bestünde, könnte dieser sie nicht verarbeiten. Der zweite bedienende Knoten hat daher keine Möglichkeit, die Flow Labels herauszufinden, mit denen er die benötigten Kontextdaten vom Gateway-Knoten anfordern könnte.
3. Der Mobilfunkteilnehmer bewegt sich von einem bedienenden Knoten nach Version 1 zu einem anderen der gleichen Version, aber der Gateway-Knoten arbeitet nach Version 0. In diesem Fall kommunizieren die bedienenden Knoten untereinander nach Version 1, mit dem Gateway-Knoten jedoch nach Version 0. Der Gateway-Knoten ordnet somit beim Aufbau eines Tunnels ein Flow Label zu, dieses kann jedoch nicht vom ersten an den zweiten Knoten übertragen werden, so daß dieser auch nicht die Kontextinformationen vom Gateway-Knoten abfragen kann.

Die Aufgabe der Erfindung besteht darin, Verfahren zum Umlegen eines Tunnels von einem ersten bedienenden Knoten eines GPRS-Systems auf einen zweiten anzugeben, die auch dann funktionieren, wenn sich unter den bedienenden Knoten und dem Gateway-Knoten wenigstens ein Knoten nach Version 0 und andere nach Version 1 des GTP-Protokolls befinden.

Die Aufgabe wird für den Fall, daß der erste bedienende Knoten ein Knoten nach Version 0 ist und der zweite bedienende Knoten und der Gateway-Knoten Knoten nach Version 1 sind, durch ein Verfahren nach Anspruch 1 gelöst. Dieses sieht vor, daß die Aufforderung zur Anpassung des Kontexts, die der zweite bedienende Knoten an den Gateway-Knoten richtet, eine Angabe von IMSI und NSAPI des betreffenden Tunnels enthält. Diese Angabe erlaubt es dem Gateway-Knoten, eine eindeutige Entsprechung zu einem gespeicherten Kontext herzustellen und so die benötigten Kontextdaten an den zweiten Knoten zu liefern.

Bevorzugte Ausführungsformen davon sind in den jeweiligen Unteransprüchen 2 bis 4 angegeben.

Die benötigte Angabe von IMSI und NSAPI kann auf ganz einfache Weise dadurch übertragen werden, daß der zweite bedienende Knoten und der Gateway-Knoten den unter Version 0 des GTP-Protokolls aufgebauten Tunnel unter der gleichen Protokollversion weiterbetreiben. In diesem Fall enthält die vom zweiten Knoten an den Gateway-Knoten zu sendende Aufforderung zur Anpassung des Kontexts, die Nachricht "Update PDP Context Request", von vorneherein diese benötigten Angaben. Diese Lösung beinhaltet also, daß das Protokoll, welches der zweite bedienende Knoten bei der Kommunikation mit dem Gateway-Knoten anwendet, von der Vorgeschichte des Tunnels abhängt, zu denen die ausgetauschten Nachrichten gehören. Wenn ein Tunnel vom zweiten Knoten selber oder von einem anderen Knoten nach Version 1 aufgebaut worden ist, findet die Kommunikation mit dem Gateway-Knoten nach Version 1 statt; wurde der Tunnel ursprünglich von einem Knoten nach Version 0 aufgebaut, so läuft die Kommunikation mit dem Gateway-Knoten weiterhin nach Version 0, obwohl beide beteiligten Knoten Version 1 beherrschen.

Eine solche Steuerung der verwendeten Version läßt sich auf einfache Weise realisieren, wenn der erste bedienende Knoten zunächst eine dem Tunnelverlegungsvorgang einleitende Nachricht (SGSN Context Response) an den zweiten bedienenden Knoten sendet, der zweite bedienenden Knoten die Version dieser Nachricht für seine Aufforderung zur Anpassung des Kontexts an den Gateway-Knoten verwendet und dieser alle an ihn gerichteten Nachrichten in der Version beantwortet, in der er sie empfangen hat.

Eine alternative Möglichkeit ist die, daß der zweite Knoten als Aufforderung zur Anpassung des Tunnels anstelle der herkömmlichen Nachricht "Update PDP Context Request" eine Nachricht vom Typ "Create PDP Context Request" nach Version 1 sendet. Diese Nachricht wird gemäß der oben zitierten Schrift TS 29.060 vom empfangenden Gateway-Knoten richtig verarbeitet, d.h. der bestehende PDP-Kontext wird wiedergefunden und die veränderten Parameter werden ersetzt. Auf diese Weise wird sowohl der Tunnel zum zweiten bedienenden Knoten verlegt als auch in der Version verändert.

Weiterhin alternativ kann vorgesehen werden, daß auch die Nachricht "Update PDP Context Request" mit einem TEID gesendet werden kann, der den Wert 0 hat, und die zusätzlich zu dem gemäß TS 23.060 vorgesehenen Informationselementen zusätzlich IMSI und NSAPI enthält, um eine Zuordnung zu dem entsprechenden PDP-Kontext im Gateway-Knoten zu ermöglichen.

In dem Fall, daß der zweite bedienende Knoten oder der Gateway-Knoten ein Knoten nach Version 0 ist und die jeweils anderen Knoten nach Version 1 sind, wird die Aufgabe gelöst durch das Verfahren nach Anspruch 5, bei dem ein Flow Label, das der zweite bedienende Knoten und der Gateway-Knoten benötigen, um den Tunnel vom ersten auf den zweiten bedienenden Knoten umlegen zu können, dem zweiten vom ersten bedienenden Knoten zur Verfügung gestellt wird.

Bevorzugte Ausführungsformen davon sind in den jeweiligen Unteransprüchen 6 bis 17 angegeben.

Dabei gibt es verschiedene Möglichkeiten, die Zuordnung des Flow Labels vorzunehmen. Wenn der Gateway-Knoten ein Knoten nach Version 1 ist, der Aufbau des Kanals also nach Version 1 stattgefunden hat, dann ist dem Tunnel beim Aufbau nur ein TEID, aber kein Flow Label zugeordnet worden. In diesem Fall ist es zweckmäßigerweise der erste bedienende Knoten, der die Zuordnung eines Flow Labels zum Tunnel vornimmt.

Eine erste Variante sieht vor, daß der erste bedienende Knoten dem Kontext ein Flow Label mit einem Wert zuordnet, der für die Umleitung eines Tunnels von einem bedienenden Knoten nach Version 1 zu einem bedienenden Knoten nach Version 0 spezifisch ist, d.h. der verschieden ist von allen Flow Labels, die für die Kommunikation von regulär nach Version 0 arbeitenden Knoten verwendet werden. Der zweite bedienende Knoten kann auf den Empfang eines solchen spezifischen Flow Labels reagieren, indem er anstelle einer Nachricht "Update PDP Context Request", die er normalerweise an den Gateway-Knoten senden würde, wenn er ein korrektes Flow Label von einem ersten bedienenden Knoten der gleichen Version erhalten hätte, eine Nachricht "Create PDP Context Request" an den Gateway-Knoten sendet, die IMSI und NSAPI enthält und somit eine eindeutige Identifizierung des anzupassenden Kontexts am Gateway-Knoten erlaubt. Alternativ kann auch vorgesehen werden, daß der zweite bedienende Knoten eine Nachricht "Update PDP Context Request" an den Gateway-Knoten sendet, die allerdings abweichend vom geltenden Protokoll der Version 1 zusätzlich IMSI und NSAPI enthält und so wiederum eine Identifizierung zuläßt. Eine solche Vorgehensweise ist möglich, weil die bestehende Norm keine PDP Update Requests mit Flow Label 0 vorsieht und deren Verarbeitung daher nicht normiert ist.

Eine zweite Variante des Verfahrens, die ebenfalls dann anwendbar ist, wenn der Gateway-Knoten nach Version 1 und der zweite bedienende Knoten nach Version 0 arbeiten, sieht vor, daß der Gateway-Knoten jedem vom ersten bedienenden Knoten nach Version 1 etablierten Kontext nicht nur eine TEID zuordnet, sondern gleichzeitig über ein festgelegtes Verfahren verfügt, nach dem er jedem nach Version 1 etablierten Kontext bzw. genauer gesagt dessen TEID ein Flow Label zuordnen kann. Somit entspricht im Gateway-Knoten jedem nach GTP-Version 1 etablierten Kontext ein TEID und ein Flow Label. Zweckmäßigerweise kann der Gateway-Knoten bereits bei der Vergabe von TEIDs die daraus resultierenden Flow Labels in dem Sinne berücksichtigen, daß eine effektive Identifizierung von Kontexten anhand der Flow Labels möglich ist. Das gleiche Verfahren steht auch dem ersten bedienenden Knoten zur Verfügung. Wenn ein Tunnel, der von dem ersten bedienenden Knoten nach GTP-Version 1 etabliert worden ist, auf einen zweiten bedienenden Knoten nach Version 0 umgelenkt werden muß, so kann der erste bedienende Knoten durch Anwendung des Verfahrens unmittelbar den korrekten Wert des Flow Labels ermitteln und dem zweiten bedienenden Knoten zur Verfügung stellen, anhand dessen der Gateway-Knoten den PDP-Kontext identifizieren kann. Somit kann der zweite bedienende Knoten den Gateway-Knoten in der gleichen Weise ansprechen, als ob er den Tunnel von einem bedienenden Knoten nach Version 0 übergeben bekommen hätte.

Ein bevorzugtes, weil besonders einfaches Verfahren zum Zuordnen des Flow Labels zu einem TEID ist das Gleichsetzen des Flow Labels mit den zwei niederwertigen Bytes des TEID. Wenn hingegen der Gateway Knoten ein Knoten nach Version 0 und die beiden bedienenden Knoten Knoten nach Version 1 sind, so ist die Zuordnung eines Flow Labels zum Tunnel bereits bei dessen Aufbau vom Gateway-Knoten vorgenommen worden, und dieses Flow Label ist dem ersten bedienenden Knoten bekannt. Um dieses Flow Label an den zweiten Knoten - über Version 1-Nachrichten - zu übermitteln, ist es zweckmäßig, es im TEID-Feld einer Version 1-Nachricht zu "verpacken".

Da das Flow Label das TEID-Feld nicht ausfüllt, ist es vorteilhaft möglich, den verbleibenden Platz in dem TEID-Feld zur Übertragung eines vorgegebenen Wertes zu nutzen, der andernfalls in einem TEID nicht vorkommt und an dem der zweite bedienende Knoten daher zu erkennen vermag, daß es sich bei dem übertragenen Wert nicht um einen TEID, sondern um ein "verpacktes" Flow Label handelt, und den Wert dementsprechend korrekt verarbeiten kann. Ein solcher vorgegebener Wert kann z.B. 0 sein.

Ausführungsbeispiele werden nachfolgend anhand der Zeichnungen näher erläutert. Es zeigen:
- Figuren 1 bis 3: die möglichen Konstellationen bei der Übergabe eines Tunnels zwischen zwei bedienenden Knoten unter Beteiligung von jeweils zwei Knoten nach GTP-Version 1 und einem Knoten nach Version 0;
- Figuren 4 bis 6: den Ablauf der Signalisierung bei der Übergabe des Tunnels in den verschiedenen Konstellationen.

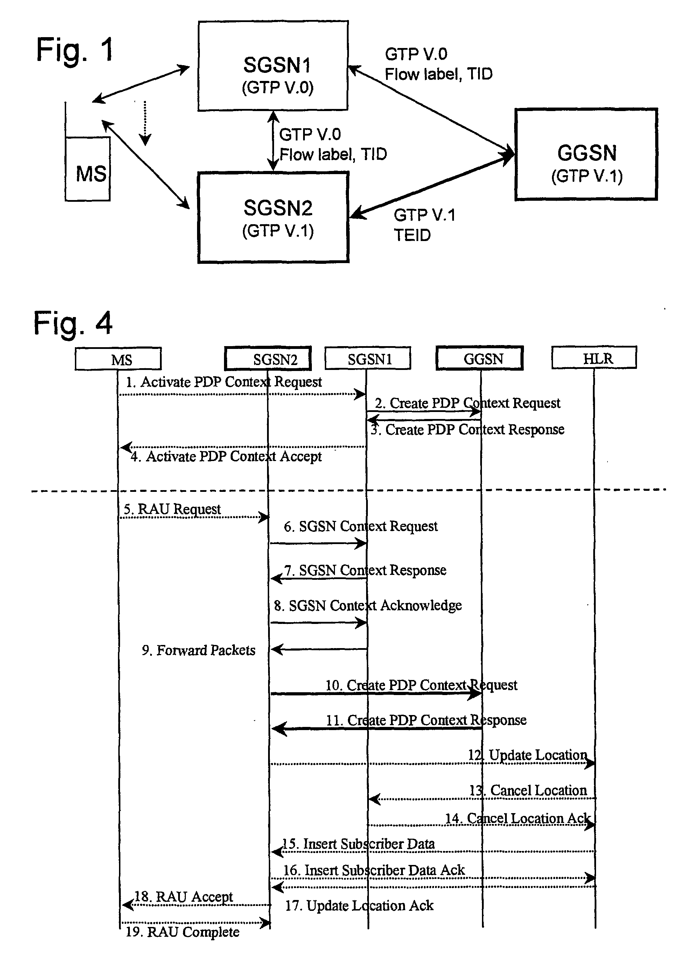

Bei der Konstellation der Figur 1 ist der erste bedienende Knoten SGSN1, über den der Tunnel des Endgeräts MS ursprünglich aufgebaut worden ist, ein Knoten nach GTP-Version 0; er kommuniziert mit dem Gateway-Knoten GGSN und dem zweiten bedienenden Knoten SGSN2 nach GTP-Version 0, d.h. die ausgetauschten Nachrichten sind gekennzeichnet durch Flow Label und TEID. Der Gateway-Knoten GGSN und der zweite bedienende Knoten SGSN2 kommunizieren miteinander nach Version 1 mit durch TEIDs gekennzeichneten Nachrichten.

Figur 4 zeigt den Ablauf der Signalisierung zwischen einem Endgerät MS und den drei Knoten SGSN1, SGSN2 und GGSN einerseits beim Aktivieren eines PDP-Kontexts und andererseits bei der Umlegung des GTP-Tunnels. Dabei sind Nachrichten gemäß GTP-Version 0 durch magere, Nachrichten nach Version 1 durch fette Pfeile dargestellt. Nachrichten, die nicht zwischen Knoten ausgetauscht werden und daher nicht an das GTP-Protokoll gebunden sind wie etwa mit dem Endgerät MS ausgetauschte Nachrichten sind gestrichelt dargestellt.

In Schritt 1 sendet das Endgerät MS eine Anforderung zur Aktivierung eines PDP-Kontexts (Activate PDP Context Request) an den SGSN1, der unter anderem die NSAPI und Art bzw. Qualität des gewünschten Dienstes spezifiziert. Der bedienende Knoten SGSN1 richtet daraufhin eine Anforderung "Create PDP Context Request" nach PDP-Version 0 an den Gateway-Knoten GGSN, in der die IMSI und NSAPI dem Gateway-Knoten mitgeteilt werden (Schritt 2). Der Gateway-Knoten erzeugt daraufhin einen neuen Eintrag in seiner PDP-Kontexttabelle, die es ihm erlaubt, Datenpakete des Endgeräts MS zwischen dem SGSN1 und einem externen, in den Figuren nicht dargestellten PDP-Netzwerk zu routen und Gebühren zu berechnen, und teilt ihm ein Flow Label zu. Als Bestätigung sendet er in Schritt 3 eine Nachricht "Create PDP Context Response" zurück an den ersten bedienenden Knoten SGSN1, die das zugeteilte Flow Label enthält. Der erste bedienende Knoten bestätigt seinerseits die Einrichtung des Kontexts dem Endgerät MS durch eine Nachricht "Activate PDP Context Accept" (Schritt 4).

Durch das zugeordnete Flow Label ist der SGSN1 in der Lage, Datenpakte des Endgeräts MS, die zu dem neu eingerichteten Kontext gehören, so zu kennzeichnen, daß der Gateway-Knoten GGSN sie von den Datenpakten anderer Endgeräte oder von anderen Kontexten zugehörigen Datenpaketen des gleichen Endgeräts unterscheiden kann.

Der Prozeß des Umlegen eines Tunnels beginnt damit, daß das Endgerät in Schritt 5 eine Aufforderung "Routing Area Update Request" an den zweiten bedienenden Knoten SGSN2 sendet. Dieser Knoten SGSN2 arbeitet nach GTP-Version 1.

Durch eine Nachricht "SGSN Context Request" nach GTP-Version 0 (Schritt 6) gibt er dem ersten bedienenden Knoten SGSN1 zunächst bekannt, daß der Kontext übergeben werden soll; der SGSN1 bestätigt dies durch eine Nachricht "SGSN Context Response" (Schritt 7) und beginnt, von dem PDP-Netzwerk kommende und für die Teilnehmerstation MS bestimmte Datenpakete zu puffern. Nachdem im Schritt 8 der neu bedienende Knoten SGSN2 seine Bereitschaft zur Übernahme von Daten durch eine Nachricht "SGSN Context Acknowledge" bestätigt hat, leitet der Knoten SGSN1 die gepufferten Datenpakete in Schritt 9 zum Knoten SGSN2 weiter.

Um zu erreichen, daß für die Teilnehmerstation MS bestimmte Datenpakte nicht mehr an SGSN1, sondern direkt an den neuen bedienenden Knoten SGSN2 geroutet werden, muß der Gateway-Knoten GGSN über die Änderung informiert werden. Dies erfolgt durch eine Aufforderung zur Anpassung des Kontexts, die in Schritt 10 vom SGSN2 an den Gateway-Knoten GGSN gesendet wird.

Während im Falle der Übernahme eines Kontexts von einem bedienenden Knoten der gleichen Version die Aufforderung zur Anpassung des Kontexts eine Nachricht "Update PDP Context Request" wäre, verwendet der zweite bedienenden Knoten im hier betrachteten Fall als Aufforderung eine Nachricht vom Typ "Create PDP Context Request". Diese Nachricht enthält im Gegensatz zur Nachricht "Update PDP Context Request" gemäß GTP-Version 1 IMSI und NSAPI des Endgerätes MS. Der Gateway-Knoten erwartet bei einer Nachricht dieses Typs nicht, daß sie mit einem definierten TEID gesendet wird; er versucht daher nicht, einen solchen TEID der Nachricht zu interpretieren, sondern er identifiziert den betreffenden Kontext in dem von ihm geführten Verzeichnis direkt anhand von IMSI und NSAPI. Der so gefundene Kontexteintrag wird aktualisiert, indem ihm der neue bedienende Knoten SGSN2 sowie die GTP-Version zugeordnet wird, nach der die Kommunikation zwischen GGSN und bedienendem Knoten abläuft.

Wenn der Gateway-Knoten diese Operation erfolgreich ausgeführt hat, bestätigt er dies in Schritt 11 dem neuen SGSN2 durch eine Nachricht, die vom Typ "Create PDP Context Response" oder "Update PDP Context Response" sein kann.

Bevor das Endgerät MS in Schritt 18 eine Bestätigung seiner RAU-Anforderung "Routing Area Update Accept" erhält, findet noch ein Nachrichtenaustausch der beiden bedienenden Knoten mit dem Home Location Register HLR des Mobilfunk-Kommunikationssystems statt, in deren Verlauf die Zuordnung des Endgeräts MS zu dem neuen bedienenden Knoten SGSN2 in diesem Register vermerkt wird. Diese Schritte unterscheiden sich nicht von den für ein GSM- oder UMTS-Funk-Kommunikation bekannten Schritten und werden deshalb hier nicht eingehend beschrieben.
Alternativ zur Verwendung der Nachricht "Create PDP Context Request" in Schritt 10 kann auch eine gegenüber der geltenden GTP-Version 1 geringfügig modifizierte Nachricht vom Typ "Update PDP Context Request" angewendet werden. Diese modifizierte Nachricht enthält einen TEID mit dem Wert 0 sowie IMSI und NSAPI des Endgeräts MS. Der Gateway-Knoten GGSN vergibt selbst keine TEIDs mit Wert 0. Wenn er einen "Update PDP Context Request" mit TEID = 0 empfängt, so kann daraus geschlossen werden, daß der TEID nicht vom Gateway-Knoten GGSN vergeben worden ist und daß ihm somit kein Eintrag im Kontextverzeichnis des GGSN entspricht. Daher greift der GGSN in einen solchem Falle auf IMSI und NSAPI zurück, um den von dem "Update PDP Context Request" betroffenen Kontext zu identifizieren und wie oben beschrieben zu aktualisieren.

Eine weitere Alternative ist, daß der zweite bedienende Knoten für die Aktualisierungsaufforderung des Schritts 10 jeweils diejenige GTP-Version wählt, in der er in Schritt S7 die Nachricht "SGSN Context Acknowledge" erhalten hat, hier also die Version 0. Auf diese Weise gibt er sich dem GGSN gegenüber für den betroffenen Kontext als Version-0-Knoten aus, kann diesem den anzupassenden Kontext durch Angabe eines Flow Labels identifizieren, und erhält vom Gateway-Knoten Antwortnachrichten ebenfalls in Version 0. Auf diese Weise wird der Kontext auf den neuen bedienenden Knoten SGSN2 korrekt umgelegt, auch wenn die verwendete GTP-Version die gleiche bleibt.

Ein zweites Verfahren zum Umlegen des Tunnels vom ersten bedienenden Knoten GGSN1 auf den zweiten GGSN2 unterscheidet sich vom in Fig. 4 gezeigten Signalisierungsablauf dadurch, daß auch der zweite bedienende Knoten in Schritt 10 für seine Aufforderung zur Aktualisierung des Kontexts Version 0 verwendet, in der er bereits in Schritt 7 das Flow Label des Tunnels erhalten hat. Der Gateway-Knoten antwortet darauf in Schritt 11 ebenfalls unter Verwendung von Version 0. Das heißt obwohl zweiter bedienender Knoten SGSN2 und Gateway-Knoten GGSN Version 1 beherrschen, führen sie den unter Version 0 aufgebauten Tunnel unter Anwendung von Version 0 weiter.

Da sich bei diesem zweiten Verfahren die Version des Tunnels beim Umlegen auf den zweiten bedienenden Knoten nicht ändert, sind besondere Vorkehrungen erforderlich, falls der Tunnel ein zweites Mal, auf einen dritten bedienenden Knoten nach Version 1 umgelegt werden muß.

Bei der Übergabe dieses Version-0-Tunnels von einem zweiten an einen dritten bedienenden Knoten, die beide Version 1 anwenden, stellen sich die gleichen Probleme wie in dem Fall, daß ein zwischen einem ersten bedienenden Knoten nach Version 1 und einem Gateway-Knoten nach Version 0 aufgebauter Tunnel an einen zweiten bedienenden Knoten nach Version 1 umgelegt werden muß. Einige der an späterer Stelle beschriebenen Lösungen dieses Problems sind daher auch auf diesen Fall anwendbar.

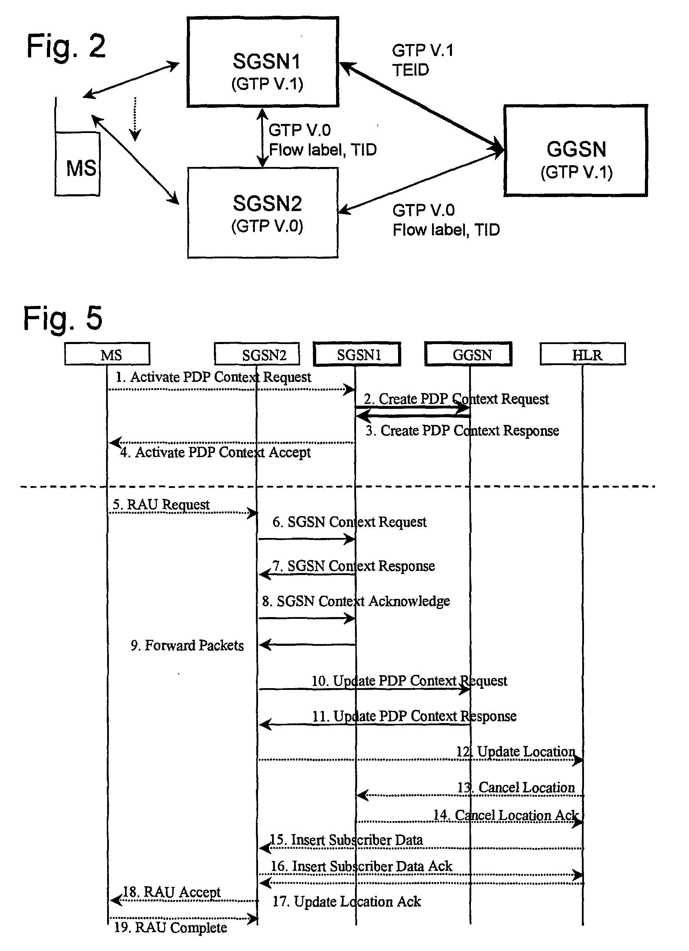

Figur 2 zeigt eine Konfiguration, in der ein erster Knoten SGSN1 nach GTP-Version 1, ein Gateway-Knoten GGSN nach GTP-Version 1 und ein zweiter bedienender Knoten SGSN2 nach Version 0 miteinander kommunizieren. Der erste bedienende Knoten SGSN1 und der Gateway-Knoten GGSN verwenden untereinander also durch Tunnel Endpoint Identifier TEID gekennzeichnete Nachrichten nach Version 1, die zwei bedienenden Knoten SGSN1 und SGSN2 verwenden untereinander durch Flow Labels und TID gekennzeichnete Nachrichten nach Version 0.

Die Reihenfolge der Schritte zum Aufbauen und Umlegen des Tunnels, die in Figur 5 dargestellt ist, entspricht der von Figur 4. Allerdings sind die für die verschiedenen Nachrichten verwendeten GTP-Versionen, wiederum durch dicke und dünne Pfeile gekennzeichnet, unterschiedlich. Die Kontextanforderung "Create PDP Context Request" und die Antwort darauf in den Schritten 2 und 3 entsprechen in ihrer Zielsetzung denen von Figur 4, allerdings mit dem Unterschied, daß für sie GTP-Version 1 eingesetzt wird, und daß infolgedessen der Gateway-Knoten GGSN dem Kontext einen Tunnel Endpoint Identifier TEID zuordnet und diesen an den ersten bedienenden Knoten SGSN1 zurückmeldet.

Die Anforderung "SGSN Context Request" nach GTP-Version 0, die der zweite bedienende Knoten SGSN2 in Schritt 6 an den ersten richtet, wird von diesem mit einem "SGSN Context Response" nach Version 0 beantwortet. Bei einer rein nach Version 0 ablaufenden Kanalumlegung enthielte diese Nachricht in ihrem Informationselement (IE) "PDP Context" ein vom Gateway-Knoten an den ersten bedienenden Knoten für diesen Kontext vergebenes Flow Label. Da hier ein solches Flow-Label nicht existiert, wird stattdessen im ersten bedienenden Knoten ein Flow Label nach einem vorab festgelegten Verfahren aus dem vom Gateway-Knoten GGSN vergebenen TEID berechnet ist. Ein besonders einfaches Verfahren zur Berechnung des Flow Labels ist, jeweils die zwei niederwertigen Bytes eines TEID als Flow Label zu verwenden und die zwei höherwertigen zu vernachlässigen. Dieses Flow Label wird vom zweiten bedienenden Knoten SGSN2 in seiner in Schritt 10 an den Gateway-Knoten gerichteten Aufforderung zur Kontextanpassung verwendet. Da dem Gateway-Knoten GGSN das Verfahren "bekannt" ist, nach dem der erste bedienende Knoten GGSN1 Flow Labels aus TEIDs erzeugt, kann er bei Empfang des entsprechenden Flow Labels in einer Aufforderung zur Kontextaktualisierung in Schritt 10 vom zweiten bedienenden Knoten leicht eine geringe Zahl von Kontexten in seinem Verzeichnis ausfindig machen, die von der Aktualisierung betroffen sein könnten. Unter diesen den tatsächlichen Betroffenen zu ermitteln, ist dann ohne weiteres möglich.

Eine andere Möglichkeit, den Kontext zu aktualisieren, ist die Verwendung von Flow Labels mit dem Wert 0, ähnlich wie oben mit Bezug auf Figur 4 beschrieben. Da Flow Labels mit diesem Wert ansonsten nicht vergeben bzw. allenfalls von einem bedienenden Knoten nach Version 0 in Nachrichten vom Typ "Create PDP Context Request" verwendet werden, bei denen ein Flow Label des Tunnels zum Zeitpunkt des Sendens der Nachricht noch nicht bekannt ist, kann der Gateway-Knoten GGSN, wenn er vom zweiten bedienenden Knoten SGSN2 eine Nachricht mit einem solchen Flow Label mit Wert 0 empfängt, daraus folgern, daß das Flow Label nicht von ihm selbst vergeben worden sein kann und daß deshalb eine Zuordnung der Nachricht zu einem Tunnel unter Vernachlässigung des Flow Labels und unter Verwendung von mitübertragener Identifizierungsinformation, das heißt der im TID im Kopf der Nachricht enthaltenen IMSI und NSAPI des Endgeräts, stattfinden muß.

Als weitere Alternative kann noch eine Ergänzung von GTP-Version 0 vorgesehen werden, bei der der zweite bedienenden Knoten SGSN2 eine Nachricht vom Typ "Create PDP Context Request" sendet, wenn er vom ersten bedienenden Knoten eine Nachricht mit auf 0 gesetztem Flow Label erhält.

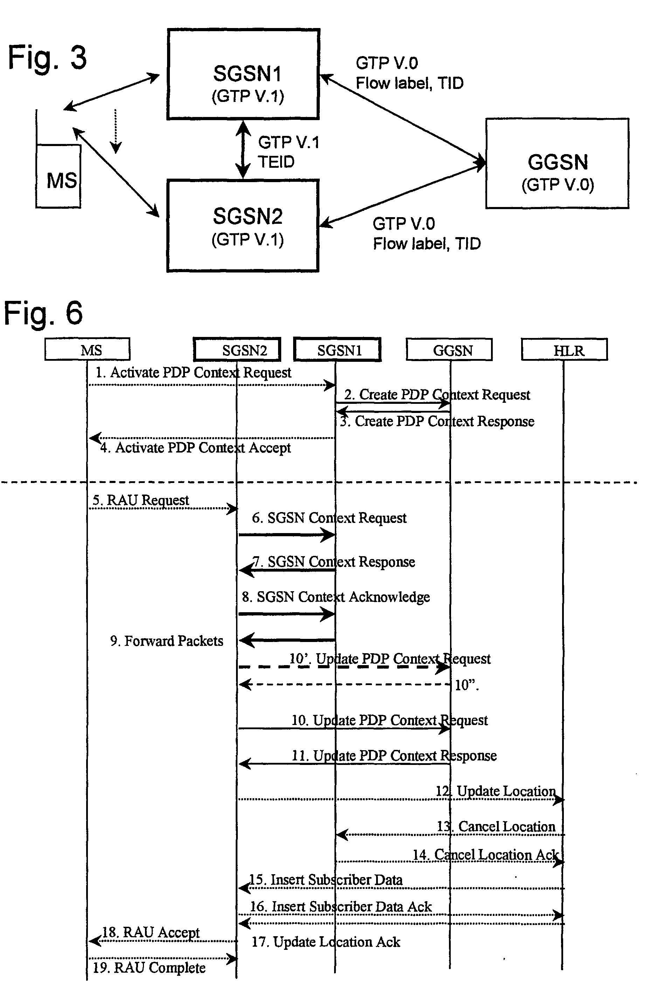

Bei der in Figur 3 gezeigten dritten Konstellation sind beide bedienenden Knoten SGSN1 und SGSN2 Knoten nach GTP-Version 1 und der Gateway-Knoten GGSN ist ein Knoten nach Version 0. Der Aufbau des Tunnels und seine Übergabe vom ersten bedienenden Knoten SGSN1 an den zweiten SGSN2 sind in Fig. 6 gezeigt. Der Aufbau des Tunnels in den Schritten 1 bis 4 läuft genauso ab wie mit Bezug auf Figur 1 und 4 beschrieben. Untereinander müssen die zwei bedienenden Knoten Version 1 anwenden. Um das zwischen bedienendem Knoten SGSN1 und Gateway-Knoten GGSN ausgehandelte Flow Label an den zweiten bedienenden Knoten SGSN2 zu übertragen, muß es also über eine Verbindung der Version 1 befördert werden. Um dieses Flow Label zum zweiten bedienenden Knoten SGSN2 zu befördern, ergänzt es der erste bedienende Knoten SGSN1 um zwei höherwertige Bytes auf das Format eines TEID, der in Schritt 7 (SGSN Context Response) an den zweiten Knoten SGSN2 übermittelt wird.

Einer ersten Variante des Verfahrens zufolge werden anschließend zwei in Figur 6 als gestrichelte Pfeile dargestellte Nachrichten ausgetauscht: Der Knoten SGSN sendet in Schritt 10' eine Aufforderung zur Kontextanpassung (Update PDP Context Request) nach Version 1 an den Gateway-Knoten GGSN. Da dieser nur Version 0 beherrscht, signalisiert er dem zweiten Knoten SGSN2 (Schritt 10"), daß er die Aufforderung nicht verarbeiten kann. Daran erkennt der zweite Knoten, daß der Gateway-Knoten eine Version-0-Nachricht mit einem Flow-Label benötigt, und erzeugt daraufhin in Schritt 10 eine neue Aufforderung, diesmal nach Version 0, in die sie die zwei niedrigerwertigen Bytes des vom ersten Knoten SGSN1 empfangenen TEID als Flow Label einfügt.

Einer zweiten Variante zufolge verwendet der erste bedienende Knoten SGSN1 zwei Bytes mit einem vorgegebenen Wert, um das dem Tunnel zugeteilte Flow Label auf das Format eines TEID zu ergänzen. Dieser vorgegebene Wert, hier 0, sollte dann bei der normalen Erzeugung eines PDP Kontexts der Version 1 nicht vergeben werden, so daß der zweite bedienende Knoten SGSN2 an dem Wert dieser 2 Bytes erkennen kann, daß es sich bei der in Schritt 7 im Format eines TEID an ihn übertragenen Information in Wirklichkeit um ein Flow Label handelt, dieses wieder herstellt und somit für die Aufforderung zur Aktualisierung des Kontexts in Schritt 10 von vorneherein das von dem Gateway-Knoten GGSN interpretierbare Nachrichtenformat der Version 0 wählen kann.

Da bei dieser zweiten Variante die vom zweiten bedienenden Knoten SGSN2 für die Aktualisierungsaufforderung verwendete Version nicht im Dialog zwischen zweitem Knoten SGSN2 und Gateway-Knoten GGSN von letzterem festgelegt wird, sondern durch die Version der Nachricht SGSN Context Response bestimmt ist, eignet sich diese Variante auch für den oben bereits angesprochenen Fall, daß ein Tunnel, der ursprünglich zwischen einem bedienenden Knoten SGSN 1 nach Version 0 und einem Version-1-GGSN aufgebaut und dann zu einem zweiten bedienenden Knoten SGSN2 nach Version 1 unter Beibehaltung ursprünglich für den Tunnel verwendeten Protokollversion an einen dritten bedienenden Knoten nach Version 1 umgelegt wird.

Gemäß einer dritten Variante kann die in Schritt 7 zu übertragende Kontextinformation auch dahingehend erweitert werden, daß sowohl Flow Labels als auch TEID transportiert werden können, jeweils als solche gekennzeichnet. Dies kann durch Hinzufügen eines zusätzlichen Datenfeldes zu der Kontextinformation erfolgen, die das Flow Label aufnimmt, so daß, wenn bekannt, sowohl TEID als auch Flow Label an den zweiten bedienenden Knoten SGSN2 übergeben werden können. Denkbar ist auch die Hinzufügung eines einfachen Flags, dessen Status den Inhalt des TEID-Feldes einer Nachricht als TEID oder als Flow Label kennzeichnet. Damit ist der Wertebereich für TEID nicht eingeschränkt.

Auch diese dritte Variante ist für die Umlegung eines unter Version 0 betriebenen Tunnels an einen dritten bedienenden Knoten nach Version 1 geeignet.

Eine vierte Möglichkeit ist, auch zwischen den bedienenden Knoten GTP-Version 0 anzuwenden. Zwar beginnt der zweite bedienende Knoten GGSN2 den Dialog mit dem ersten Knoten SGSN1 mit GTP Version 1, was der erste Knoten (SGSN1) versteht; er müßte daher normalerweise mit GTP Version 1 antworten. Indem jedoch der erste Knoten SGSN1 "Nichtverstehen" der GTP Version 1 Nachricht vortäuscht, veranlaßt er den zweiten bedienenden Knoten SGSN2, Version 0 zu verwenden, so daß das Flow Label übertragen werden kann. Auch diese Variante erlaubt die Umlegung eines Version-0-Tunnels unter Beibehaltung der Version an einen dritten bedienenden Knoten.

## Patentansprüche

1. Verfahren zum Umlegen eines Tunnels von einem ersten bedienenden Knoten (SGSN1) eines Mobilfunk-Kommunikationssystems, insbesondere eines GPRS-Systems, auf einen zweiten (SGSN2), wobei das Mobilfunk-Kommunikationssystem bedienende Knoten (SGSN1, SGSN2) und einen Gateway-Knoten (GGSN) aufweist, wobei wenigstens einer dieser Knoten ein Knoten nach Version 0 des GTP-Protokolls ist und andere dieser Knoten Knoten nach Version 1 des GTP-Protokolls sind, bei dem der zweite Knoten (SGSN2) eine Nachricht über den Bedarf zum Umlegen des Tunnels (RAU request) von einem Endgerät (MS) erhält und daraufhin eine Aufforderung zur Anpassung des den Tunnel betreffenden Kontexts an den Gateway-Knoten (GGSN) richtet, **dadurch gekennzeichnet, daß** in dem Fall, daß der erste bedienende Knoten (SGSN1) ein Knoten nach Version 0 ist und der zweite bedienende Knoten (SGSN2) und der Gateway-Knoten (GGSN) Knoten nach Version 1 sind, die Aufforderung zur Anpassung des Kontexts eine Angabe von IMSI und NSAPI des betreffenden Tunnels enthält.

2. Verfahren nach Anspruch 1, **dadurch gekennzeichnet, daß** die Aufforderung eine Nachricht vom Typ "Create PDP Context Request" ist.

3. Verfahren nach Anspruch 1, **dadurch gekennzeichnet, daß** die Aufforderung eine Nachricht vom Typ "Update PDP Context Request" ist, die einen TEID mit dem Wert 0 und die die Angabe über IMSI und NSAPI des Tunnels enthält.

4. Verfahren nach Anspruch 1, **dadurch gekennzeichnet, daß** der Gateway-Knoten (GGSN) und der zweite bedienende Knoten (SGSN2) den umgelegten Tunnel gemäß Version 0 des GTP-Protokolls betreiben.

5. Verfahren zum Umlegen eines Tunnels von einem ersten bedienenden Knoten (SGSN1) eines Mobilfunk-Kommunikationssystems, insbesondere eines GPRS-Systems, auf einen zweiten (SGSN2), wobei das Mobilfunk-Kommunikationssystem bedienende Knoten (SGSN1, SGSN2) und einen Gateway-Knoten (GGSN) aufweist, wobei wenigstens einer dieser Knoten ein Knoten nach Version 0 des GTP-Protokolls ist und andere dieser Knoten Knoten nach Version 1 des GTP-Protokolls sind, bei dem der zweite Knoten (SGSN2) eine Nachricht über den Bedarf zum Umlegen des Tunnels (RAU request) von einem Endgerät (MS) erhält und daraufhin eine Aufforderung zur Anpassung des den Tunnel betreffenden Kontexts an den Gateway-Knoten (GGSN) richtet, **dadurch gekennzeichnet, daß** in dem Fall, daß der erste bedienende Knoten (SGSN1) und der Gateway-Knoten (GGSN) Knoten nach Version 1 sind und der zweite bedienende Knoten (SGSN2) ein Knoten nach Version 0 ist, oder in dem Fall, daß der Gateway-Knoten (GGSN) ein Knoten nach Version 0 ist und die bedienenden Knoten (SGSN1, SGSN2) jeweils Knoten nach Version 1 sind, der erste bedienende Knoten (SGSN1) ein dem Kontext zugeordnetes Flow Label an den zweiten bedienenden Knoten überträgt und daß der zweite bedienende Knoten (SGSN2) die Aufforderung zur Anpassung des den Tunnel betreffenden Kontexts unter Einfügung dieses zugeordneten Flow Labels sendet.

6. Verfahren nach Anspruch 5, **dadurch gekennzeichnet, daß** in dem Fall, daß der erste bedienende Knoten (SGSN1) und der Gateway-Knoten (GGSN) Knoten nach Version 1 sind und der zweite bedienende Knoten (SGSN2) ein Knoten nach Version 0 ist, der erste bedienende Knoten (SGSN1) dem Kontext ein Flow Label mit einem vorgegebenen Wert zuordnet, der für die Umleitung eines Tunnels von einem bedienenden Knoten nach Version 1 zu einem bedienenden Knoten nach Version 0 spezifisch ist.

7. Verfahren nach Anspruch 6, **dadurch gekennzeichnet, daß** der Wert des Flow Labels 0 ist.

8. Verfahren nach einem der Ansprüche 5 bis 7, **dadurch gekennzeichnet, daß** der zweite bedienende Knoten (SGSN2) als Aufforderung zur Anpassung des den Tunnel betreffenden Kontexts eine Nachricht vom Typ "Create PDP Context Request" sendet.

9. Verfahren nach Anspruch 5, **dadurch gekennzeichnet, daß** in dem Fall, daß der erste bedienende Knoten (SGSN1) und der Gateway-Knoten (GGSN) Knoten nach Version 1 sind und der zweite bedienende Knoten (SGSN2) ein Knoten nach Version 0 ist, der erste bedienende Knoten (SGSN1) jedem nach Version 1 etablierten Kontext den Flow Label nach einem gegebenen Verfahren zuordnet, und daß der Gateway-Knoten (GGSN) das gleiche Flow Label nach dem gleichen Verfahren zuordnet.

10. Verfahren nach Anspruch 9, **dadurch gekennzeichnet, daß** das Verfahren zum Zuordnen des Flow Labels das Gleichsetzen des Flow Labels mit den zwei niederwertigen Bytes des TEID umfaßt.

11. Verfahren nach Anspruch 5, **dadurch gekennzeichnet, daß** in dem Fall, daß der Gateway-Knoten (GGSN) ein Knoten nach Version 0 ist und die bedienenden Knoten (SGSN1, SGSN2) Knoten nach Version 1 sind, das dem Tunnel vom Gateway-Knoten (GGSN) zugeteilte Flow Label im TEID-Feld einer vom ersten (SGSN1) an den zweiten bedienenden Knoten (SGSN2) gesendete Nachricht übertragen wird.

12. Verfahren nach Anspruch 11, **dadurch gekennzeichnet, daß** der zweite bedienende Knoten eine Aufforderung zur Kontextaktualisierung nach Version 1 an den Gateway-Knoten (GGSN) sendet, und daß er, wenn der Gateway-Knoten (GGSN) die Aufforderung nicht verarbeiten kann, das Flow Label aus dem TEID-Feld extrahiert und eine neue Aufforderung nach Version 0 unter Verwendung des extrahierten Flow Labels sendet.

13. Verfahren nach Anspruch 11, **dadurch gekennzeichnet, daß** in vom Flow Label nicht ausgefüllte Bytes des TEID-Feldes ein vorgegebener Wert eingetragen wird, der für die Umleitung eines Tunnels zwischen zwei bedienenden Knoten nach Version 1 über einen Gateway-Knoten nach Version 0 spezifisch ist.

14. Verfahren nach Anspruch 13, **dadurch gekennzeichnet, daß** der zweite bedienende Knoten (SGSN2) die Aufforderung zur Kontextaktualisierung nach Version 0 sendet, wenn das TEID-Feld den vorgegebenen Wert enthält.

15. Verfahren nach Anspruch 13 oder 14, **dadurch gekennzeichnet, daß** der spezifische Wert 0 ist.

16. Verfahren nach Anspruch 11, **dadurch gekennzeichnet, daß** zusätzlich zu dem TEID-Feld eine Kennung übertragen wird, die angibt, ob das TEID-Feld einen TEID oder ein Flow Label enthält.

17. Verfahren nach Anspruch 5, **dadurch gekennzeichnet, daß** in dem Fall, daß der Gateway-Knoten (GGSN) ein Knoten nach Version 0 ist und die bedienenden Knoten (SGSN1, SGSN2) Knoten nach Version 1 sind, das dem Tunnel vom Gateway-Knoten (GGSN) zugeteilte Flow Label in einem speziellen, vom TEID-Feld verschiedenen Datenfeld einer Nachricht vom ersten an den zweiten bedienenden Knoten (SGSN1 bzw. SGSN2) übermittelt wird.

## Claims

1. Method for transferring a tunnel from a first controlling node (SGSN1) in a mobile radio communications system, in particular a GPRS system, to a second node (SGSN2), with the mobile radio communications system having controlling nodes (SGSN1, SGSN2) and a gateway node (GGSN), with at least one of these nodes being a node in accordance with Version 0 of the GTP protocol and others of these nodes being nodes of the Version 1 type of the GTP protocol, in which the second node (SGSN2) receives a message about the requirement to transfer the tunnel (RAU request) from a terminal (MS) and then passes a request for matching the context relating to the tunnel to the gateway node (GGSN), **characterized in that**, in a situation where the first controlling node (SGSN1) is a node of the Version 0 type and the second controlling node (SGSN2) and the gateway node (GGSN) are nodes of the Version 1 type, the request for adaptation of the context contains details of the IMSI and NSAPI for the relevant tunnel.

2. Method according to Claim 1, **characterized in that** the request is a message of the "Create PDP Context Request" type.

3. Method according to Claim 1, **characterized in that** the request is a message of the "Update PDP Context Request" type, which contains a TEID with the value 0, and which contains the details of the IMSI and NSAPI for the tunnel.

4. Method according to Claim 1, **characterized in that** the gateway node (GGSN) and the second controlling node (SGSN2) operate the transferred tunnel of the Version 0 type of the GTP protocol.

5. A method for transferring a tunnel from a first controlling node (SGSN1) in a mobile radio communications system, in particular a GPRS system, to a second node (SGSN2), with the mobile radio communications system having controlling nodes (SGSN1, SGSN2) and a gateway node (GGSN), with at least one of these nodes being a node in accordance with Version 0 of the GTP protocol and others of these nodes being nodes of the Version 1 type of the GTP protocol, in which the second node (SGSN2) receives a message about the requirement to transfer the tunnel (RAU request) from a terminal (MS) and then passes a request for matching the context relating to the tunnel to the gateway node (GGSN), **characterized in that**, in the situation where the first controlling node (SGSN1) and the gateway node (GGSN) are nodes of the Version 1 type, and the second controlling node (SGSN2) is a node of the Version 0 type, or in the situation where the gateway node (GGSN) is a node of the Version 0 type and the controlling nodes (SGSN1, SGSN2) are each nodes in accordance with Version 1, the first controlling node (SGSN1) transmits a flow label, which is associated with the context, to the second controlling node, and **in that** the second controlling node (SGSN2) sends the request for adaptation of the context relating to the tunnel, with this associated flow label being inserted.

6. Method according to Claim 5, **characterized in that**, in the situation where the first controlling node (SGSN1) and the gateway node (GGSN) are nodes of the Version 1 type, and the second controlling node (SGSN2) is a node of the Version 0 type, the first controlling node (SGSN1) associates a flow label with the predetermined value with the context, which value is specific for the transfer of a tunnel from a controlling node of the Version 1 type to a controlling node of the Version 0 type.

7. Method according to Claim 6, **characterized in that** the value of the flow label is 0.

8. Method according to one of Claims 5 to 7, **characterized in that** the second controlling node (SGSN2) sends a message of the "Create PDP Context Request" type as the request for adaptation of the context relating to the tunnel.

9. Method according to Claim 5, **characterized in that**, in the situation where the first controlling node (SGSN1) and the gateway node (GGSN) are nodes of the Version 1 type and the second controlling node (SGSN2) is a node of the Version 0 type, the first controlling node (SGSN1) allocates the flow label to each established context of the Version 1 type using a given method, and **in that** the gateway node (GGSN) allocates the same flow label using the same method.

10. Method according to Claim 9, **characterized in that** the method for allocation of the flow label comprises equating the flow label to the two least significant bytes of the TEID.

11. Method according to Claim 5, **characterized in that**, in the situation where the gateway node (GGSN) is a node of the Version 0 type and the controlling nodes (SGSN1, SGSN2) are nodes of the Version 1 type, the flow label which is allocated to the tunnel by the gateway node (GGSN) is transmitted in the TEID field of a first message which is sent from the first controlling node (SGSN1) to the second controlling node (SGSN2).

12. Method according to Claim 11, **characterized in that** the second controlling node sends a request for context updating based on Version 1 to the gateway node (GGSN), and **in that**, if the gateway node (GGSN) cannot process the request, the second controlling node extracts the flow label from the TEID field and sends a new request based on Version 0 using the extracted flow label.

13. Method according to Claim 11, **characterized in that** a predetermined value is entered in TEID field bytes which are not filled by the flow label, which value is specific for the transfer of a tunnel between two controlling nodes of the Version 1 type via a gateway node of the Version 0 type.

14. Method according to Claim 13, **characterized in that** the second controlling node (SGSN2) sends the request for context updating using Version 0 when the TEID field contains the predetermined value.

15. Method according to Claim 13 or 14, **characterized in that** the specific value is 0.

16. Method according to Claim 11, **characterized in that**, in addition to the TEID field, an identifier is transmitted, which indicates whether the TEID field contains a TEID or a flow label.

17. Method according to Claim 5, **characterized in that**, in the situation where the gateway node (GGSN) is a node of the Version 0 type and the controlling nodes (SGSN1, SGSN2) are nodes of the Version 1 type, the flow label which is allocated to the tunnel by the gateway node (GGSN) is transmitted in a specific data field, which is not the TEID field, in a message from the first controlling node (SGSN1) to the second controlling node (SGSN2).

## Revendications

1. Procédé pour transférer un tunnel d'un premier noeud exploitant (SGSN1) d'un système de radiocommunication mobile, notamment d'un système GPRS, à un deuxième noeud (SGSN2), le système de radiocommunication mobile comportant des noeuds exploitants (SGSN1, SGSN2) et un noeud passerelle (GGSN), au moins l'un de ces noeuds étant un noeud selon la version 0 du protocole GTP et d'autres de ces noeuds étant des noeuds selon la version 1 du protocole GTP, dans lequel le deuxième noeud (SGSN2) reçoit un message sur la nécessité de transférer le tunnel (RAU request) d'un terminal (MS) et dans lequel il adresse ensuite au noeud passerelle (GGSN) une demande d'adaptation du contexte concernant le tunnel, **caractérisé par le fait que**, si le premier noeud exploitant (SGSN1) est un noeud selon la version 0 et le deuxième noeud exploitant (SGSN2) et le noeud passerelle (GGSN) sont des noeuds selon la version 1, la demande d'adaptation du contexte contient une indication de l'IMSI et du NSAPI du tunnel concerné.

2. Procédé selon la revendication 1, **caractérisé par le fait que** la demande est un message du type "Create PDP Context Request".

3. Procédé selon la revendication 1, **caractérisé par le fait que** la demande est un message du type "Update PDP Context Request" qui contient un TEID avec la valeur 0 et l'indication de l'IMSI et du NSAPI du tunnel.

4. Procédé selon la revendication 1, **caractérisé par le fait que** le noeud passerelle (GGSN) et le deuxième noeud exploitant (SGSN2) exploitent le tunnel transféré selon la version 0 du protocole GTP.

5. Procédé pour transférer un tunnel d'un premier noeud exploitant (SGSN1) d'un système de radiocommunication mobile, notamment d'un système GPRS, à un deuxième noeud (SGSN2), le système de radiocommunication mobile comportant des noeuds exploitants (SGSN1, SGSN2) et un noeud passerelle (GGSN), au moins l'un de ces noeuds étant un noeud selon la version 0 du protocole GTP et d'autres de ces noeuds étant des noeuds selon la version 1 du protocole GTP, dans lequel le deuxième noeud (SGSN2) reçoit un message sur la nécessité de transférer le tunnel (RAU request) d'un terminal (MS) et dans lequel il adresse ensuite au noeud passerelle (GGSN) une demande d'adaptation du contexte concernant le tunnel, **caractérisé par le fait que**, si le premier noeud exploitant (SGSN1) et le noeud passerelle (GGSN) sont des noeuds selon la version 1 et le deuxième noeud exploitant (SGSN2) est un noeud selon la version 0 ou si le noeud passerelle (GGSN) est un noeud selon la version 0 et les noeuds exploitants (SGSN1, SGSN2) sont des noeuds selon la version 1, le premier noeud exploitant (SGSN1) transmet un Flow Label attribué au contexte au deuxième noeud exploitant et que le deuxième noeud exploitant (SGSN2) envoie la demande d'adaptation du contexte concernant le tunnel en insérant ce Flow Label attribué.

6. Procédé selon la revendication 5, **caractérisé par le fait que**, si le premier noeud exploitant (SGSN1) et le noeud passerelle (GGSN) sont des noeuds selon la version 1 et le deuxième noeud exploitant (SGSN2) est un noeud selon la version 0, le premier noeud exploitant (SGSN1) attribue au contexte un Flow Label avec une valeur prédéterminée qui est spécifique de la déviation d'un tunnel d'un noeud exploitant selon la version 1 à un noeud exploitant selon la version 0.

7. Procédé selon la revendication 6, **caractérisé par le fait que** la valeur du Flow Label est 0.

8. Procédé selon l'une des revendications 5 à 7, **caractérisé par le fait que** le deuxième noeud exploitant (SGSN2) envoie comme demande d'adaptation du contexte concernant le tunnel un message du type "Create PDP Context Request".

9. Procédé selon la revendication 5, **caractérisé par le fait que**, si le premier noeud exploitant (SGSN1) et le noeud passerelle (GGSN) sont des noeuds selon la version 1 et le deuxième noeud exploitant (SGSN2) est un noeud selon la version 0, le premier noeud exploitant (SGSN1) attribue à chaque contexte établi selon la version 1 le Flow Label selon un procédé donné et le noeud passerelle (GGSN) attribue le même Flow Label selon le même procédé.

10. Procédé selon la revendication 9, **caractérisé par le fait que** le procédé pour l'attribution du Flow Label comprend **le fait que** le Flow Label est défini égal aux deux octets de poids faible du TEID.

11. Procédé selon la revendication 5, **caractérisé par le fait que**, si le noeud passerelle (GGSN) est un noeud selon la version 0 et les noeuds exploitants (SGSN1, SGSN2) sont des noeuds selon la version 1, le Flow Label attribué au tunnel par le noeud passerelle (GGSN) est transmis dans le champ TEID d'un message envoyé par le premier noeud exploitant (SGSN1) au deuxième noeud exploitant (SGSN2).

12. Procédé selon la revendication 11, **caractérisé par le fait que** le deuxième noeud exploitant envoie une demande de mise à jour de contexte selon la version 1 au noeud passerelle (GGSN) et que, si le noeud passerelle (GGSN) ne peut pas traiter la demande, ce deuxième noeud exploitant extrait le Flow Label du champ TEID et envoie une nouvelle demande selon la version 0 en utilisant le Flow Label extrait.

13. Procédé selon la revendication 11, **caractérisé par le fait qu'**on enregistre dans des octets du champ TEID qui ne sont pas remplis par le Flow Label une valeur prédéterminée qui est spécifique de la déviation d'un tunnel entre deux noeuds exploitants selon la version 1 via un noeud passerelle selon la version 0.

14. Procédé selon la revendication 13, **caractérisé par le fait que** le deuxième noeud exploitant (SGSN2) envoie la demande de mise à jour de contexte selon la version 0 si le champ TEID contient la valeur prédéterminée.

15. Procédé selon la revendication 13 ou 14, **caractérisé par le fait que** la valeur spécifique est 0.

16. Procédé selon la revendication 11, **caractérisé par le fait que**, en plus du champ TEID, on transmet un indicateur qui dit si le champ TEID contient un TEID ou un Flow Label.

17. Procédé selon la revendication 5, **caractérisé par le fait que**, si le noeud passerelle (GGSN) est un noeud selon la version 0 et les noeuds exploitants (SGSN1, SGSN2) sont des noeuds selon la version 1, le Flow Label attribué au tunnel par le noeud passerelle (GGSN) est transmis dans un champ de données spécial, différent du champ TEID, d'un message envoyé par le premier noeud exploitant (SGSN1) au deuxième noeud exploitant (SGSN2).
